(19) Europäisches Patentamt
European Patent Office
Office européen des brevets

(11) Publication number: 0 183 387
A2

(12) # EUROPEAN PATENT APPLICATION

(21) Application number: 85307709.7

(22) Date of filing: 25.10.85

(51) Int. Cl.[4]: C 01 B 25/37
C 07 F 9/09, C 07 F 9/65

(30) Priority: 30.11.84 US 676968

(43) Date of publication of application:
04.06.86 Bulletin 86/23

(84) Designated Contracting States:
BE DE FR GB IT NL

(71) Applicant: MOBIL OIL CORPORATION
150 East 42nd Street
New York New York 10017(US)

(72) Inventor: Derouane, Eric Gerard
56 Rue des Champs Verts
B-5020 Namur (Champion)(BE)

(72) Inventor: Dessau, Ralph Moritz
14 Celler Road
Edison New Jersey 08817(US)

(72) Inventor: Heilweil, Israel Joel
47 Linwood Circle
Princeton New Jersey 08540(US)

(72) Inventor: Kerr, George Thomson
10 Pin Oak Drive
Lawrenceville New Jersey 08648(US)

(74) Representative: West, Alan Harry
Mobil Court 3 Clements Inn
London WC2A 2EB(GB)

(54) **A crystalline zirconium phosphate and a method of preparing the same.**

(57) A crystalline zirconium phosphate compound has the composition:

$xA: yM_{2/m}O:ZrO_2:zP_2O_5:wH_2O$

where A is an organic cation having a molecular weight of at least 100; M is a cation of valence m; $0<x<4$; $0<y<6$; $0<z<3$; $0<w<20$; and had the following X-ray diffraction lines:–

| d-space | 2-theta | $I/I_o$ |
|---|---|---|
| 11.33 ± 0.1 | 7.79 | m |
| 3.89 ± 0.05 | 22.87 | s |
| 3.29 ± 0.03 | 27.05 | v |
| 3.14 ± 0.03 | 28.45 | w-m |
| 2.66 ± 0.02 | 33.71 | w |
| 2.63 ± 0.02 | 34.10 | w |


EP 0 183 387 A2

F-3170

# A CRYSTALLINE ZIRCONIUM PHOSPHATE AND A METHOD OF PREPARING THE SAME

The present invention relates to a crystalline zirconium phosphate and a method of preparing the same.

Crystalline zirconium phosphates are known to exhibit a capacity for ion exchange. Alpha zirconium phosphate $Zr(HPO_4)_2.H_2O$ is known to have a small interlayer radius (7.6 angstroms) which results in slow exchange of cations having a large ionic radius such as $Cs^+$, $Ba^{2+}$ and hydrated $Mg^{2+}$. A more highly hydrated form of zirconium phosphate, theta, variously reported as $Zr(HPO_4)_2.8H_2O$ and $Zr(HPO_4)_2.6H_2O$, exhibits improved cation exchange properties probably owing to its greater interlayer spacing of 10.4 angstroms (Clearfield et al., J.Inorg. Nuc. Chem., 1964, Vol. 26, pp. 117 to 129, Pergamon Press). The anhydrous phase of zirconium phosphate $Zr(HPO_4)_2$, known as beta zirconium phosphate, and the dihydrate phase, gamma zirconium phosphate $Zr(HPO_4)_2.2H_2O$ also exhibit greater interlayer distance than the alpha form with d-spacings of 9.4 and 12.2 angstroms, respectively (Clearfield et al., J. Inorg. Nuc. Chem. 1968, Vol. 30 pp. 2249-2258, Pergamon Press). Like the theta form, anhydrous and beta zirconium phosphates are capable of ion-exchanging bulky cations at a greater rate than the alpha form.

The above zirconium phosphates are normally prepared by addition of a soluble salt of zirconium to a solution of phosphoric acid or a soluble sulfate. In the presence of an excess of the phosphorus derivative, i.e., P:Zr mole ratio $>2$, a gel is formed which crystallizes when the reactant mixture is maintained at elevated temperature for an extended time, say about 48 hours. Other methods of producing zirconium phosphates are set out in U.S. Patent Nos. 3,056,647; 3,485,763; 4,025,608 and 4,381,289.

Although the resulting materials exhibit a significant ion exchange capability, they suffer from limitations in thermal stability. At temperatures above about 300°C such materials are subject to losses in sorption and surface acidity.

Zirconium phosphonates have been prepared by reacting organics such as ethylene oxide with the acidic hydroxyl of the layered zirconium phosphate to convert the inorganic acid hydroxyls to bound organic alkanol groups (see, e.g. Yamaka, Inorg. Chem 15, 2811, (1976)). Other phosphonates of zirconium including zirconium bis(benzenephosphonate), zirconium bis(hydroxymethanephosphonate) monohydrate and zirconium bis(monoethylphosphonate) have been prepared (Alberti et al., J. Inorg. Nucl. Chem., 40, 1113 (1978)). U.S. Patent No. 4,298,723 describes a process for preparing layered materials similar in structure to zirconium phosphates, in which a source of zirconium such as zirconyl chloride is combined with an organophosphorus acid compound of the formula $((HO)_2OP)_nR$, wherein n is 1 or 2 and R may be an acyclic group, heteroacyclic group containing one or more heteroatoms selected from O, N, and S, a cyclic group, aromatic group, or a heterocyclic group containing one or more heteroatoms selected from O, N and S. The organo groups occupy an average surface area not greater than about 24 square angstroms in each section bounded by four zirconium atoms. The resulting layered materials exhibit improved thermal stability over conventional zirconium phosphates.

It has now been found that crystalline zirconium phosphates of high thermal stability and sorption capacity can be prepared by including a bulky organic cations having a molecular weight of at least about 100 in a forming mixture which contains a source of zirconium and a source of phosphorus.

Accordingly, the invention resides in one aspect in a crystalline zirconium phosphate compound having the composition:

$$xA: yM_{2/m}O:ZrO_2: zP_2O_5:wH_2O$$

where A is an organic cation having a molecular weight of at least 100; M is a cation of valence m; $0<x<4$; $0<y<6$; $0<z<3$; $0<w<20$; and having the X-ray diffraction lines of Table 1 of the specification.

Table 1

| d-space | 2-theta | $I/I_0$ |
|---|---|---|
| 11.33 ± 0.1 | 7.79 | m |
| 3.89 ± 0.05 | 22.87 | s |
| 3.29 ± 0.03 | 27.05 | vs |
| 3.14 ± 0.03 | 28.45 | w-m |
| 2.66 ± 0.02 | 33.71 | w |
| 2.63 ± 0.02 | 34.10 | w |

with $I/I_0$ from 0 to 24% = w (weak), from 25 to 49% = m (medium), from 50 to 74% = s (strong), and from 75 to 100% = vs (very strong).

In a further aspect, the invention resides in a method for preparing a crystalline zirconium phosphate compound having the X-ray diffraction lines of Table 1 of the specification and the composition:

$$xA:yM_{2/m}O:ZrO_2:zP_2O_5:wH_2O$$

where A is an organic cation having a molecular weight of at least 100; M is a cation of valence m; $0<x<4$; $0<y<6$; $0<z<3$; and $0<w<20$ wherein a phosphorus source selected from water-soluble phosphates and phosphoric acid is combined with a salt of said organic cation, and thereafter combined with a source of zirconium under crystallization conditions.

Preferably, $0.01 <x< 2$, $1< y <4$, $0.5 <Z <2$ and $0 <w < 10$.

Cations of onium compounds are particularly useful in preparing zirconium phosphates of the present invention. Onium compounds which may be used include those having the following formula:

$$R_pM^+X^-$$

wherein R is alkyl of from 1 to 20 carbon atoms, heteroalkyl of from 1 to 20 carbon atoms, aryl, heteroaryl, cycloalkyl of from 3 to 6 carbon atoms, cycloheteroalkyl, of from 3 to 6 carbon atoms, or combinations thereof; p is 1 to 4, preferably 4; M is a quadricoordinate element (e.g., nitrogen, phosphorus, arsenic,

antimony or bismuth) or a heteroatom (e.g., N, O, S, Se, P, As, etc.) in an alicyclic, heteroalicyclic or heteroaromatic structure; and X is an anion (e.g., fluoride, chloride, bromide, iodide, hydroxide, acetate, sulfate, carboxylate, etc.). When M is a heteroatom in an alicyclic, heteroalicyclic or heteroaromatic structure, the cation $R_pM^+$ may be, as non-limiting examples,

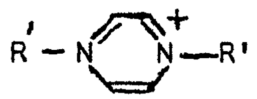,
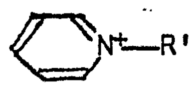

or 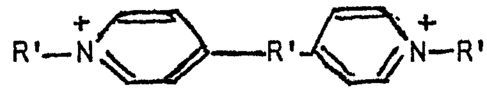

wherein R' is alkyl of from 1 to 20 carbon atoms, heteroalkyl of from 1 to 20 carbon atoms, aryl, heteroaryl, cycloalkyl of from 3 to 6 carbon atoms or cycloheteroalkyl of from 3 to 6 carbon atoms.

In particular, tetraalkylammonium and tetraalkylphosphonium compounds have been found to be useful onium compounds, e.g., tetrapropylammonium bromide and tetrapropylammonium hydroxide. Compounds containing multiple cationic centers including cationic polymers known as ionomers, may also be used such as those having the formula:

$$[(R)_3M^+(Z)_nM^+(R)_3]_y(X^-)_{2n}$$

where $y > 1$

wherein R, M and X are as above defined, Z is a bridging member selected from alkyl of from 1 to 20 carbon atoms, alkenyl of from 2 to 20 carbon atoms, aryl, heteroalkyl of from 1 to 20 carbon atoms, heteroalkenyl of from 2 to 20 carbon atoms and heteroaryl, and n from 1 to 50. Non-limiting examples of such multiple cationic center containing compounds include:

$[(CH_3)_3As^+(CH_2)_6N^+(CH_3)_3](Cl^-)_2$,
$[(C_3H_7)_3N^+(CH_2)_{10}N^+(C_3H_7)_3](Cl^-)_2$,
$[(C_6H_5)_3N^+(C_2H_4)_{16}P^+(C_6H_5)_3](OH^-)_2$,
$[(C_{18}H_{37})_3P^+(C_2H_2)_3P^+(CH_3)_3](Cl^-)_2$,
$[(C_2H_5)_3N^+(C_6H_4)N^+(C_2H_5)_3](Br^-)_2$,
$[(CH_3)_3Sb^+(CH_2)_{10}Sb^+(CH_3)_3](Cl^-)_2$,
$[(C_6H_5)_3Sb^+(CH_2)_4N^+(CH_3)_3](OH^-)_2$,
$[(C_2H_3)_3N^+(CH_2)_{50}N^+(C_2H_3)_3](OH^-)_2$,
$[(C_6H_5)_3P^+(C_2H_2)_6As^+(CH_3)_3](Cl^-)_2$,
$[(CH_3)_3N^+(CH_2)_6N^+(CH_3)_3](Cl^-)_2$,
and

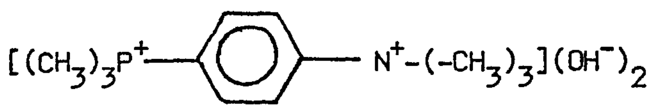

The cation may also be the cation of an organic phosphorus salt such as those disclosed in U.S. Patents 4,209,449 and 4,336,385 and available from Mona Industries, Paterson, N.J., U.S.A. Broadly speaking, such salts are of the formula:

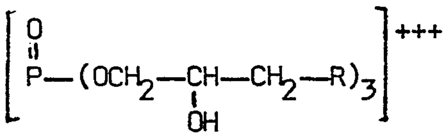 $3X^-$

wherein

R is an amidoamine moiety of the formula

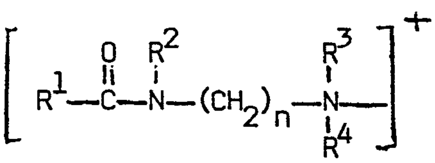

$R^1$ is alkyl, alkenyl, alkoxy, or hydroalkyl of from 5 to 22 carbon atoms each, or aryl or alkary of up to 20 carbon atoms,

$R^2$ is hydrogen or alkyl, hydroxyalkyl or alkenyl of up to 6 carbon atoms each or cycloalkyl of up to 6 carbon atoms, preferably of from 2 to 5 carbon atoms, or polyoxyalkalene of up to 10 carbon atoms;

$R^3$ and $R^4$, which may be the same or different, are selected from alkyl, hydroxyalkyl, carboxyalkyl of up to 6 carbon atoms in each alkyl moiety, and polyoxyalkylene of up to 10 carbon atoms; in addition, $R^3$ and $R^4$ taken together with the nitrogen to which they are attached, may represent an N-containing heterocycle;

n is an integer from 2 to 12; and

X is an anion.

In a particularly preferred embodiment, $R_1$ is $C_5$ to $C_{17}$ alkyl, $R_2$ is H, $R_3$ and $R_4$ are methyl and n=3. In another preferred embodiment $R_1$ is $C_{11}$ to $C_{13}$ alkyl and X is Cl.

In another embodiment, R may be

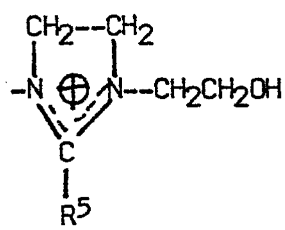

and $R^5$ is $C_5$ to $C_{17}$ alkyl, say, for example, $C_{12}$ alkyl, and X is Cl.

In still another embodiment the phosphorus-containing salt may comprise a zwitterion, for example, materials such as

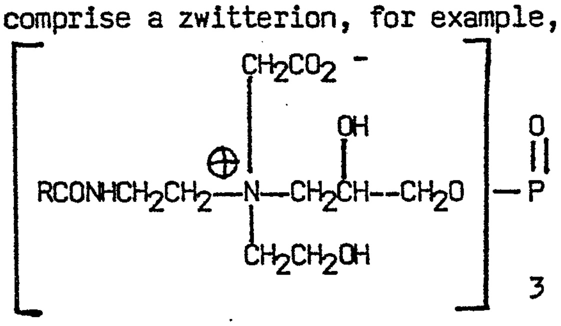

may be included in the forming mixture.

While not wishing to be bound by theory, it is believed that the surfactant and directing properties of the organic cation, as well as its ability to ion-exchange during synthesis, advantageously affect the gelation of the reactant mixture, the

rheology of the obtained gel phase, as well as gel crystallization. The bulkiness of the cation serve to keep the layers far apart during the reaction.

Suitable sources of zirconium for use in the method of the invention include water soluble zirconium compounds such as zirconyl chloride, $ZrOCl.8H_2O$. Suitable phosphorus sources include water soluble phosphates or hydrogen phosphates such as $NaH_2PO_4.H_2O$, organophosphorus compounds, phosphorus oxides, and phosphoric acid. Preferably, the bulky organic cationic compound is combined with the phosphorus source, e.g., $NaH_2PO_4.H_2O$ and where necessary, solution is effected by adding an acid solution such as 3N HCl. The resulting mixture can then be refluxed, during which time the source of zirconium, e.g., a 1M $ZrOCl_2.8H_2O$ solution, is gradually added. The P/Zr molar ratio of the resulting forming mixture, exclusive of added organic cation, is greater than 2. Upon addition of zirconium a gel is formed. Crystallization of the gel results from its exposure to refluxing conditions or by autoclaving. Temperatures greater than about 70°C, preferably 90°C to 150°C, may be used in effecting crystallization. The pressure may be atmospheric, autogeneous, or any suitable crystallization pressure ranging from 100 to 3040 kPa (1 to 30 atm). Depending on the particular conditions employed, crystallization time can range from 1 to 500 hours.

In those situations where an alkali metal-containing phosphorus salt is used as the phosphorus source e.g., a sodium salt of phosphoric acid, some or all ion-exchange sites of the resulting crystalline zirconium phosphate material will be exchanged with alkali metal. In order to convert such material to the proton exchanged form, the as-synthesized crystalline zirconium phosphate is acid washed. Proton-exchange is preferably achieved by contacting the material to be exchanged, with a mixture of hydrochloric and/or phosphoric acid, followed by rinsing with distilled water.

Upon crystallization and any subsequent treatment such as proton-exchange or ammonium exchange, the crystalline material is dried. The drying step may be in any suitable atmosphere, including vacuum or air at temperatures ranging from 50 to 200°C, say about 120°C.

The dried crystalline zirconium phosphate may then be exposed to thermal treatment, i.e, calcined in an inert gas atmosphere, such as nitrogen or helium, and/or in an oxygen-containing atmosphere, e.g., air. Suitable calcining temperatures can range from 200 to 600°C, preferably 250°C or 500°C. Such treatment results in removal of at least some of the organic cation present in the structure of the zirconium phosphate.

The calcined materials exhibit thermal stability at temperatures of 400°C or even higher. In addition, these materials possess strong acid sites and enhanced surface acidity. Accordingly, the zirconium phosphate materials of the present invention are significantly better than prior art zirconium phosphates which exhibit poor thermal stability and reduction in surface acidity when exposed to temperatures above 300°C. Thus, the present zirconium phosphates may be used as ion exchangers or catalysts under a wide variety of operating conditions and temperatures. For example, they may be used in their acid form for acid-catalyzed reactions. Ion-exchange of the zirconium phosphate with metal ions yields a catalyst suitable for oxidation or base-catalyzed reactions. The zirconium phosphate of the present invention may also be employed as a catalyst for converting organic compounds In addition, the product of the invention may be used as a catalyst binder owing to its thermal stability.

## Examples 1-10

### Preparation of Zirconium Phosphates

A series of zirconium phosphate compounds, ZP-1 through ZP-10 were prepared in accordance with Table 2. ZP-1 and ZP-9 were conventionally prepared in the absence of bulky organic ions in the forming mixture. The remaining materials were prepared in the presence of organic ions derived from quaternary ammonium compounds such as tetrapropylammonium bromide (TPABr), tetrapropylammonium hydroxide (TPAOH) and Monaquat PT-Z, a compound having the formula:

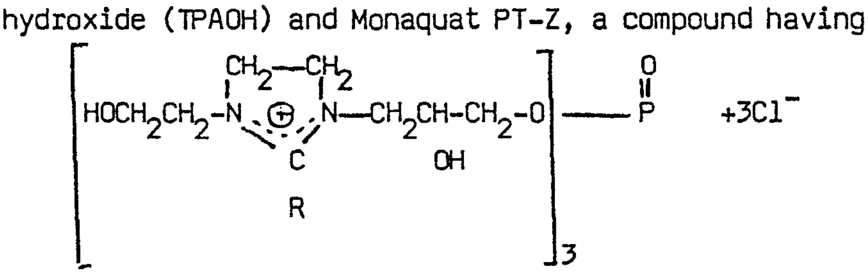

F-3170

TABLE 2. SYNTHESIS AND CHARACTERISTICS OF ZIRCONIUM PHOSPHATES

| Designation | ZP-1 | ZP-2 | ZP-3 | ZP-4 | ZP-5 | ZP-6 | ZP-7 | ZP-8 | ZP-9 | ZP-10 |
|---|---|---|---|---|---|---|---|---|---|---|
| Reaction Mixture (g) | | | | | | | | | | |
| Na-phosphate | 68 | 68 | 68 | 68 | 68 | 68 | 68 | 68 | 68 | 68 |
| Zr-oxychloride | 8 | 8 | 8 | 8 | 8 | 8 | 8 | 8 | 8 | 8 |
| HCl | 5.5 | 5.5 | 5.5 | 5.5 | 5.5 | 5.5 | 5.5 | 5.5 | 5.5 | 5.5 |
| Water | 75 | 75 | 75 | 75 | 130 | 75 | 100 | 75 | 75 | 75 |
| Organic cmpd. A=TPABr B=TPAOH C=Monaquat PT-Z | - | A | A | A | B | A | A | A | - | C |
| Organic (g) | - | 132 | 40 | 40 | 19 | 40 | 40 | 40 | - | 10 |
| Temperature (°C) | 95 | 95 | 95 | 135 | 95 | 135 | 135 | 135 | 135 | 135 |
| Time (hrs) | 25 | 25 | 25 | 25 | 25 | 48 | 25 | 168 | 25 | 25 |
| Product composition (wt.%) | | | | | | | | | | |
| C | - | 0.1 | 0.1 | 2.3 | 4.0 | 0.3 | 3.6 | 4.4 | - | 14.9 |
| N | - | - | - | 0.1 | 0.2 | - | - | 0.2 | - | 0.2 |
| Na | 6.0 | 3.8 | 4.3 | 6.1 | 9.9 | 5.3 | 0.5 | 14.2 | 8.3 | 2.8 |
| Cl | - | n.t. | n.t. | n.t. | 2.5 | 0.1 | - | 2.3 | 1.6 | 1.3 |
| Zr | 29.1 | 29.6 | 29.9 | 28.8 | 20.8 | 27.2 | 26.9 | 18.3 | 22.6 | 20.3 |
| P | 20.5 | 20.9 | 20.3 | 19.7 | 20.6 | 19.7 | 19.9 | 19.8 | 21.9 | 17.2 |
| Product molar composition | | | | | | | | | | |
| P/Zr | 2.06 | 2.07 | 1.99 | 2.01 | 2.91 | 2.12 | 2.17 | 3.17 | 2.83 | 2.49 |
| Na/P | 0.39 | 0.25 | 0.29 | 0.42 | 0.65 | 0.36 | 0.03 | 0.97 | 0.51 | 0.22 |
| Adsorption (n-hexane, wt.%, at 30°C) | | | | | | | | | | |
| Calc. 250C | 1.20 | 1.80 | - | 1.72 | 0.73 | 2.10 | - | 0.95 | 0.12 | 1.80 |
| Calc. 500C | 1.20 | 1.60 | 0.90 | 1.77 | 0.33 | 2.30 | - | 1.12 | 0.00 | 2.10 |

n.t. = not tested

The materials were prepared as follows:

The organic cation compound and 68g of $NaH_2PO_4$ $H_2O$ were dissolved in 50 ml of 3N HCl under reflux. 25.0 ml of 1 M $ZrOCl_2.8$ $H_2O$ was then added dropwise over a period of about 30 mins. A gel resulted which was crystallized by autoclaving at 135°C or refluxing at about 95°C for about 25 to 170 hours. The crystallized sodium-exchanged product was then filtered and washed. Sodium ion was proton-exchanged by acid washing in 2 N HCl and 0.2 M $H_3PO_4$ followed by rinsing with distilled water. The acid form of the zirconium phosphate was then dried in an oven at 120°C.

## Example 11

## Thermal Stability of Zirconium Phosphate

X-ray diffraction patterns of ZP-4, a zirconium phosphate prepared from a forming mixture which contains tetrapropylammonium bromide were obtained by standard techniques for as-synthesized ZP-4, ZP-4 calcined at 350°C, and ZP-4 calcined at 500°C. The X-ray diffractograms were substantially the same except for minor shifts in interplanar spacing and variation in relative intensity. Thus, it is seen that ZP-4 is thermally stable even at temperatures of 500°C.

## Example 12

## X-Ray Diffraction Pattern of Treated ZP-4

ZP-4 was treated with NaOH according to the following procedure:

1) Add 1.0g ZP-4 (as synthesized) to 130mg NaOH in 200ml water.
2) Stir for 3 hours at ambient temperature.
3) Filter, without washing, and dry at 100°C.

Another sample of ZP-4 was treated with dimethylsilane by heating 2.0g ZP-4 to 250°C (5°/min), while flowing dimethylsilane continuously through the reactor at 60 cc/min.

X-ray diffraction patterns of the samples were then obtained by conventional methods. A comparison of the two patterns showed that the crystalline structure was essentially maintained, as minor shifts only occurred in interplanar spacings. Furthermore, the uptake of dimethylsilane, a material which is relatively inert to weakly acidic conditions, indicates the presence of very strong acid sites in the partially protonated form of ZP-4.

## Example 13

## Reproducibility of ZP-4 Synthesis

Another batch of ZP-4 was prepared according to the procedure of Example 4. A comparison of X-ray diffraction patterns of the materials of Examples 4 and 13, indicated the reproducibility of the synthesis product.

WHAT IS CLAIMED IS:

1. A crystalline zirconium phosphate compound having the composition:

$xA: yM_{2/m}O:ZrO_2: zP_2O_5:wH_2O$

where A is an organic cation having a molecular weight of at least 100; M is a cation of valence m; $0<x<4$; $0<y<6$; $0<z<3$; $0<w<20$; and having the X-ray diffraction lines of Table 1 of the specification.

2. The compound of claim 1 wherein said organic cation is a cation of the salt

$R_4M^+X^-$

wherein R is selected from alkyl of from 1 to 20 carbon atoms, heteroalkyl of from 1 to 20 carbon atoms, aryl, heteroaryl, cycloalkyl of from 3 to 6 carbon atoms, cycloheteroalkyl of from 3 to 6 carbon atoms; M is a quadricoordinate element selected from nitrogen, phosphorus, arsenic, and antimony and X is an anion selected from fluoride, chloride, bromide, iodide, hydroxide, acetate, sulfate, and carboxylate.

3. The compound of claim 2 wherein R is an alkyl group of from 1 to 20 carbon atoms and M is nitrogen or phosphorous.

4. The compound of claim 3 wherein R is propyl and M is nitrogen.

5. The compound of claim 2 wherein the cation is selected from

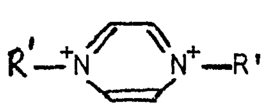,
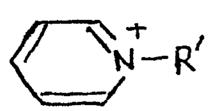
and

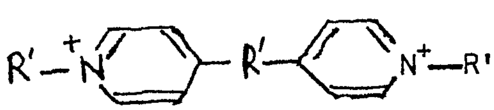

wherein R' is selected from the group consisting of alkyl of from 1 to 20 carbon atoms, heteroalkyl of from 1 to 20 carbon atoms, aryl, heteroaryl, cycloalkyl of from 3 to 6 carbon atoms and cycloheteroalkyl of from 3 to 6 carbon atoms.

6. The compound of claim 1 wherein the organic cation A is

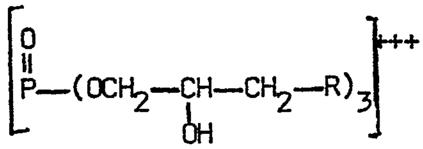

wherein

R is an amidoamine moiety of the formula

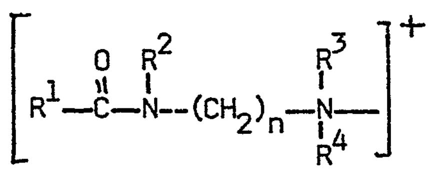

wherein $R^1$ is selected from alkyl, alkenyl, alkoxy, hydroxyalkyl, of from 5 to 22 carbon atoms each, and aryl or alkaryl of up to 20 carbon atoms,

$R^2$ is selected from hydrogen, alkyl, hydroxyalkyl, alkenyl, of up to 6 carbon atoms each; cycloalkyl of up to 6 carbon atoms; and polyoxyalkylene of up to 10 carbon atoms;

$R^3$ and $R^4$, which may be the same or different, are selected from alkyl, hydroxyalkyl, carboxyalkyl, of up to 6 carbon atoms in each alkyl moiety; polyoxyalkylene of up to 10 carbon atoms; and $R^3$ and $R^4$ taken together with the nitrogen to which they are attached, as an N-heterocycle;

and n is an integer from 2 to 12;

7. The compound of any preceding claim wherein $0.01<x<1$; $1<y<4$; $0.5<z<2$; and $0<w<10$.

8. A method for preparing a crystalline zirconium phosphate compound having the X-ray diffraction lines of Table 1 of the specification and the composition:

$$xA:yM_{2/m}O:ZrO_2:zP_2O_5:wH_2O$$

where A is an organic cation having a molecular weight of at least 100; M is a cation of valence m; $0<x<4$; $0<y<6$; $0<z<3$; and $0<w<20$ wherein a phosphorus source selected from water-soluble phosphates and phosphoric acid is combined with a salt of said organic cation, and thereafter combined with a source of zirconium under crystallization conditions.

9. The method of claim 1 wherein said soluble phosphate is $NaH_2PO_4.H_2O$; said source of zirconium is $ZrOCl_2 . 8H_2O$.

10. The method of claim 8 or claim 9 wherein $0.01<x<2$; $1<y<4$; $0.5<z<2$; and $0<w<10$.

11. The method of any one of claims 8 to 10 wherein said organic cation is a cation of the compound.

$$R_4M^+X^-$$

wherein R is selected from the group consisting of alkyls of from 1 to 20 carbon atoms, heteroalkyls of from 1 to 20 carbon atoms, aryls, heteroaryls, cycloalkyls of from 3 to 6 carbon atoms, cycloheteroalkyls, of from 3 to 6 carbon atoms; M is a quadricoordinate element selected from the group consisting of nitrogen, phosphorus, arsenic, and antimony and X is an anion selected from the group consisting of fluoride, chloride, bromide, iodide, hydroxide, acetate, sulfate, and carboxylate.

12. The method of claim 11 wherein R is an alkyl of from 1 to 20 carbon atoms and M is nitrogen or phosphorous.

13. The method of claim 12 wherein R is propyl and M is nitrogen.

14. The method of any one of claims 8 to 10 wherein said organic cation is selected from

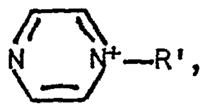

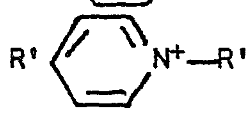

or

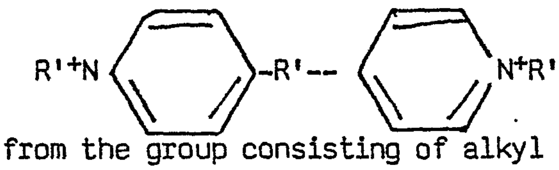

wherein R' is selected from the group consisting of alkyl of from 1 to 20 carbon atoms, heteroalkyl of from 1 to 20 carbon atoms, aryl, heteroaryl, cycloalkyl of from 3 to 6 carbon atoms and cycloheteroalkyl of from 3 to 6 carbon atoms.

15. The method of any one of claims 8 to 10 wherein said organic cation is of the formula:

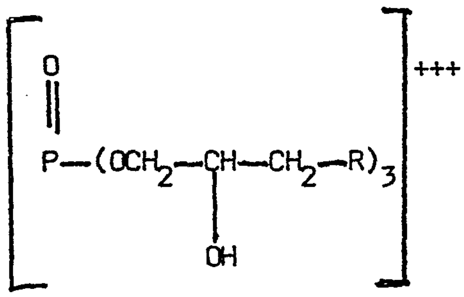

wherein

R is an amidoamine moiety of the formula

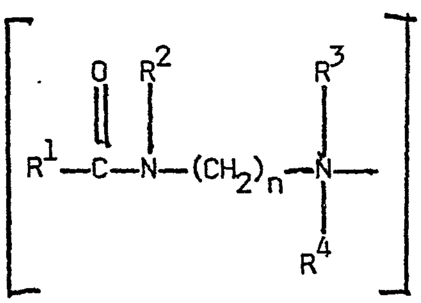

wherein $R^1$ is selected from alkyl, alkenyl, alkoxy, and hydroalkyl of from 5 to 22 carbon atoms each; and aryl or alkaryl of up to 20 carbon atoms,

$R^2$ is selected from hydrogen, alkyl, hydroxyalkyl or alkenyl of up to 6 carbon atoms each; cycloalkyl of up to 6 carbon atoms and polyoxyalkylene of up to 10 carbon atoms;

$R^3$ and $R^4$, which may be the same or different, are selected from alkyl, hydroxyalkyl, carboxyalkyl of up to 6 carbon atoms in each alkyl moiety; polyoxyalkylene of up to 10 carbon atoms; and $R^3$ and $R^4$ taken together with the nitrogen to which they are attached as an N-heterocycle; and

n is an integer from 2 to 12.

16. The method of any one of claims 8 to 15 and comprising the step of calcining the crystalline zirconium phosphate compound at least partially to remove the organic cation.